# FASCICULE DE BREVET EUROPEEN

(11) **EP 0 934 512 B1**
(45) Date de publication et mention de la délivrance du brevet: **18.09.2002**
(21) Numéro de dépôt: 97912257.9
(22) Date de dépôt: 27.10.1997
(51) Int. Cl.: G01M 3/16

(54) **CITERNE A DISPOSITIF D'ALERTE**
TANKBEHÄLTER MIT ALARMANLAGE
TANK WITH ALARM DEVICE

(30) Priorité: 28.10.1996 FR 9613121
(43) Date de publication de la demande: 11.08.1999
(73) Titulaire: COMPAGNIE DES GAZ DE PETROLE PRIMAGAZ, 75008 Paris (FR)
(72) Inventeur: BOUVIER, Daniel, F-75011 Paris (FR)
(74) Mandataire: Eidelsberg, Victor Albert
(86) Numéro de dépôt international: FR9701916
(87) Numéro de publication internationale: WO98019146

(56) Documents cités:
- GB-A- 2 132 767
- US-A- 5 202 667
- US-A- 5 229 750

## Description

La présente invention se rapporte à une citerne qui comporte des moyens de détection de son état par envoi de signaux à un dispositif d'alerte, et notamment des moyens de détection de la présence d'eau sur une partie de la surface extérieure de la cuve, ou du bon fonctionnement de la citerne, et notamment de ses moyens de détection. La présente invention concerne également un procédé de contrôle de l'état d'une citerne de ce genre.

Une description détaillée d'une citerne de ce genre est donnée dans la demande de brevet français n° 94 15474 correspondant à la demande américaine U.S. n°08/574 446 et à la demande européenne EP-A-0 718 216. Au US-A 5229750, un signal lumineux et un signal sonore sont émis pour signaler une fuite d'eau.

Lorsqu'un préposé à la surveillance de la citerne se présente, il est informé par des signaux lumineux de l'état de la citerne. Par exemple, dans le cas où deux informations sont fournies par le dispositif d'alerte et où ces deux informations sont l'apparition ou non d'eau à la surface de la cuve et le bon fonctionnement ou non du dispositif d'alerte, une première source lumineuse, telle qu'une lampe ou une photodiode, émet de la lumière si de l'eau est apparue et n'en émet pas sinon (ou est rouge dans un cas ou verte dans l'autre) et une seconde source lumineuse émet de la lumière si le dispositif d'alerte est défectueux et n'en émet pas sinon (ou est rouge dans un cas et verte dans l'autre ou tout autre façon de présenter l'information par signaux lumineux).

Ces citernes de l'art antérieur présentent l'inconvénient que l'enregistrement des données concernant leurs états dépend de la fiabilité du préposé qui peut, volontairement ou involontairement, commettre des erreurs. Or, dans le domaine des citernes, et en particulier dans le domaine des citernes enterrées contenant des gaz d'hydrocarbures, il est nécessaire que les supérieurs hiérarchiques du préposé puissent contrôler son travail de manière fiable, ceux-ci, en cas d'erreur fatale (fuite de gaz entraînant une explosion et mort d'hommes), étant tenus pour responsables.

L'invention vise donc une citerne qui permet un enregistrement fiable des informations concernant son état, et notamment indépendant de la fiabilité de l'opérateur, et qui est plus simple à effectuer que les enregistrements effectués dans les citernes de l'art antérieur.

L'invention est definie à la rev. 1.

En prévoyant ainsi de convertir les signaux lumineux en des signaux pouvant être enregistrés, on s'affranchit de l'opération de traduction que devait effectuer le préposé dans les citernes de l'état antérieur et les informations peuvent ainsi être enregistrées directement sur le magnétophone sans que le préposé puisse commettre d'erreur.

Comme les signaux enregistrables sont des signaux sonores et le support d'enregistrement est un magnétophone, le préposé peut ajouter aux informations issues de la citerne elle-même d'autres informations, telles que le nom du propriétaire, la date de vérification, les informations issues de la citerne témoignant que le passage du préposé a bien eu lieu.

Suivant un autre mode de réalisation avantageux, le dispositif d'alerte comporte deux sources notamment lumineuses, l'une fournissant une information d'un premier type, par exemple une information sur l'apparition d'eau de condensation à la surface extérieure de la cuve, et l'autre d'un second type, par exemple sur le bon fonctionnement du dispositif d'alerte lui-même. Les moyens de conversion peuvent être des oscillateurs générateurs de fréquences, commandés chacun par l'une des sources lumineuses. De préférence, une fréquence est affectée à l'apparition d'eau et une autre fréquence au bon fonctionnement du circuit électrique.

Suivant un perfectionnement de l'invention, le support d'enregistrement et les moyens de conversion forment un ensemble distinct du reste de la citerne. Il est ainsi possible au supérieur hiérarchique de contrôler le travail du préposé à distance de la citerne.

Au dessin annexé, donné uniquement à titre d'exemple,

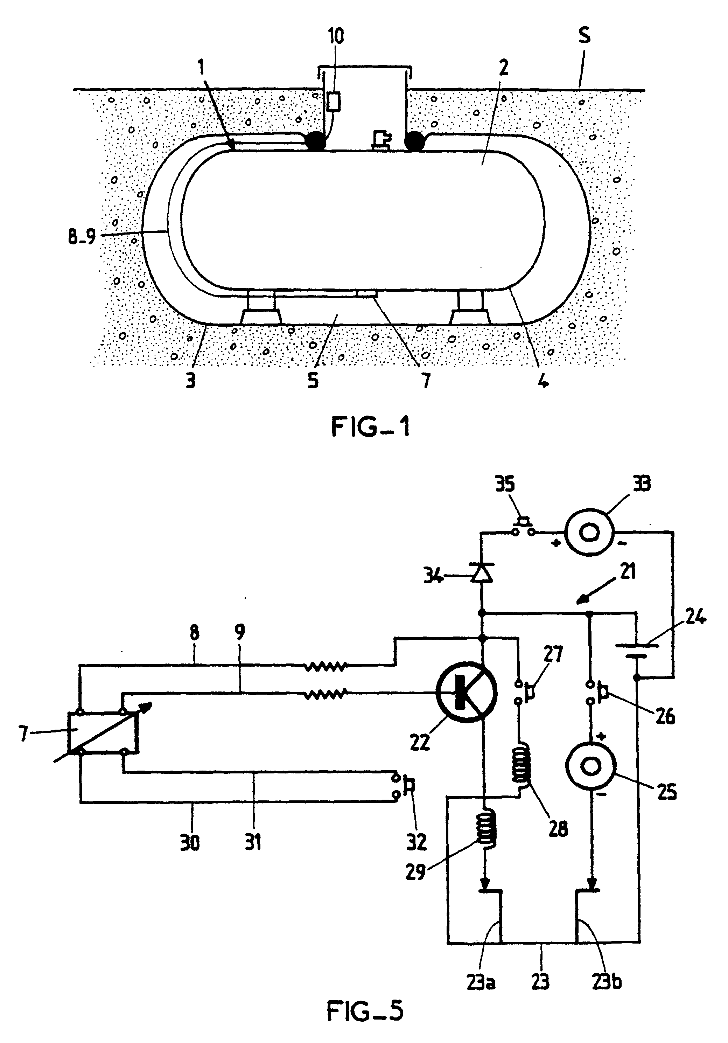

la figure 1 est une vue en coupe d'une citerne suivant l'invention,
la figure 2 représente, à plus grande échelle, une partie de la citerne de la figure 1,
la figure 3 est une vue en coupe de l'interface entre les photodiodes et le dispositif d'enregistrement,
la figure 4 représente un schéma de principe du dispositif d'enregistrement,
la figure 5 représente un schéma du circuit électrique de la citerne.

La citerne 1 comporte une cuve 2 dont la surface extérieure 4 est entourée d'une enveloppe 3 pour définir une enceinte 5 étanche. Un détecteur 7 d'apparition d'eau est disposé sur le fond de la cuve 2, du côté de sa surface extérieure et est relié par des conducteurs 8, 9 à un circuit électrique 10. Un détecteur 7 est décrit en détail dans la demande de brevet français n° 94 15474 correspondant à la demande américaine U.S. n°08/574 446 et à la demande EP-A- 0 718 216.

Le circuit électrique 10 est représenté à la figure 5.

Le conducteur 8 est relié à la base d'un transistor 22, dont l'émetteur est relié à une première branche 23a d'un relais bistable 23 à deux positions NF et NO. Cette branche de relais bistable 23a est reliée par un fil électrique d'une part à une borne d'une source de courant électrique 24 et d'autre part à la seconde branche du relais bistable 23b à deux positions NF et NO. Cette dernière est reliée par un fil électrique à une lampe 25, elle-même reliée à un interrupteur 26 à lame souple ILS relié lui-même au collecteur du transistor 20. La deuxième borne de source de courant électrique 24 est également reliée au collecteur du transistor 22. Une branche comprenant un interrupteur 27 à lame souple ILS de remise à zéro et une bobine 28 auxiliaire est montée entre la borne de source de courant électrique qui est également reliée au relais bistable 23. La bobine 29 fait partie du relais bistable 23.

Deux autres conducteurs 30, 31 sont montés aux bornes du détecteur 7 et reliés, après avoir traversé de façon étanche l'enveloppe 3, par un interrupteur 32 de vérification ILS à lame souple.

En outre, il est monté aux bornes de la source 24 de courant un montage en série constitué d'une lampe 33, d'une photodiode Zener 34 et d'un interrupteur 35 ILS.

Dans des conditions normales (pas d'apparition d'eau) aucun courant ne passe dans les conducteurs 8, 9.

Si de l'eau apparaît dans le détecteur 7, il s'ensuit un passage de courant qui entre dans la base du transistor 22. Le courant sort amplifié de l'émetteur du transistor et entre dans la première branche 23A à deux états bistables du relais bistable qui passe alors de l'état NF (fermé) qui laisse passer le courant, à l'état NO (ouvert) qui empêche le courant de passer. Le courant qui vient de passer dans la première branche du relais bistable entre également dans la seconde branche 23B du relais bistable qui passe elle de l'état NO à l'état NF. Le circuit constitué de la source de courant électrique 24, de la lampe 25 et de l'interrupteur 26 manuel est alors fermé et du courant passe dans la lampe 25 si l'interrupteur 26 est fermé. L'utilisateur, en fermant cet interrupteur 26, est alors informé:
- si la lampe émet de la lumière, que du courant est passé entre les électrodes depuis la dernière fois que le relais bistable 23 se trouvait dans sa position normale (branche A fermée, branche B ouverte), (en général la dernière visite);
- si la lampe n'émet pas et émet lorsqu'il ferme l'interrupteur 32 de vérification qu'aucun courant n'a circulé depuis la dernière fois que le relais bistable a été mis en position normale.

L'interrupteur 32 court-circuite les électrodes et permet au courant de passer entre elles. En le fermant, l'utilisateur peut alors vérifier que le circuit électrique 10 d'information fonctionne normalement, si la lampe 25 émet de la lumière. Si celle-ci n'émet pas, c'est qu'un défaut existe dans le circuit électrique 10 (câble défectueux, composants défectueux, etc ...) et une intervention y est nécessaire.

En outre, en fermant l'interrupteur 35, on provoque l'émission de lumière par la lampe 33 si la tension de la source 24 de courant est supérieure à une valeur donnée par la photodiode Zener 34 et donc si la source 24 de courant est en bon état.

Une fois ces contrôles réalisés, l'utilisateur réouvre l'interrupteur 26 ILS et ferme pendant un bref instant l'interrupteur 27 ILS de remise à zéro qui réenclenche le relais bistable dans sa position normale en alimentant la bobine 29 auxiliaire du relais.

Lorsque le préposé au contrôle se présente pour contrôler une citerne, il introduit une clef magnétique suivant un trajet précis qui actionne en séquence:
1) les interrupteurs ILS 35 et 26, le passage de l'interrupteur 35 à l'état fermé ayant pour effet de faire émettre la lampe 33 si la pile 24 est suffisamment chargée et le passage de l'interrupteur 26 à l'état fermé de provoquer l'émission de lumière par la lampe 25 s'il y a eu condensation, même temporaire, qui aurait fait basculer le relais bistable,
2) l'interrupteur 27 qui remet le relais bistable en position d'attente. Les deux lampes n'émettent pas de lumière,
3) l'interrupteur 32 qui, en court-circuitant le détecteur, permet de vérifier le bon fonctionnement du circuit électrique, notamment l'intégrité des câbles de liaison du détecteur du circuit.

La clef est alors en bout de parcours. En la retirant, elle actionne à nouveau l'interrupteur 27, qui remet le relais en position d'attente, puis actionne les interrupteurs 35 et 26 provoquant l'émission de lumière par la lampe 33 et, s'il y a eu condensation permanente ou de l'humidité sur le détecteur, l'émission de lumière par la lampe 26.

Ainsi, lors du déplacement de la clef magnétique sur le trajet mentionné précédemment, les deux lampes vont successivement émettre ou non et fournir ainsi des informations concernant l'état de la citerne.

Dans le cas où le fonctionnement est correct (pas de condensation, pile chargée et circuit électrique fiable), la lampe 33 émet puis cesse d'émettre, tandis que la lampe 25 va rester sans émettre, puis la lampe 25 va émettre et cesser d'émettre, tandis que la lampe 33 restera sans émettre et enfin la lampe 33 va émettre à nouveau, puis cesser d'émettre, tandis que la lampe 25 va rester sans émettre.

Dans le cas où un défaut est apparu, par exemple une condensation, mais que le circuit et la pile sont en bon état, la séquence sera la suivante:

Emission de lumière par les deux lampes simultanément, puis extinction des deux, puis émission par la lampe 25 seule, puis extinction, puis émission de lumière par les deux lampes et extinction.

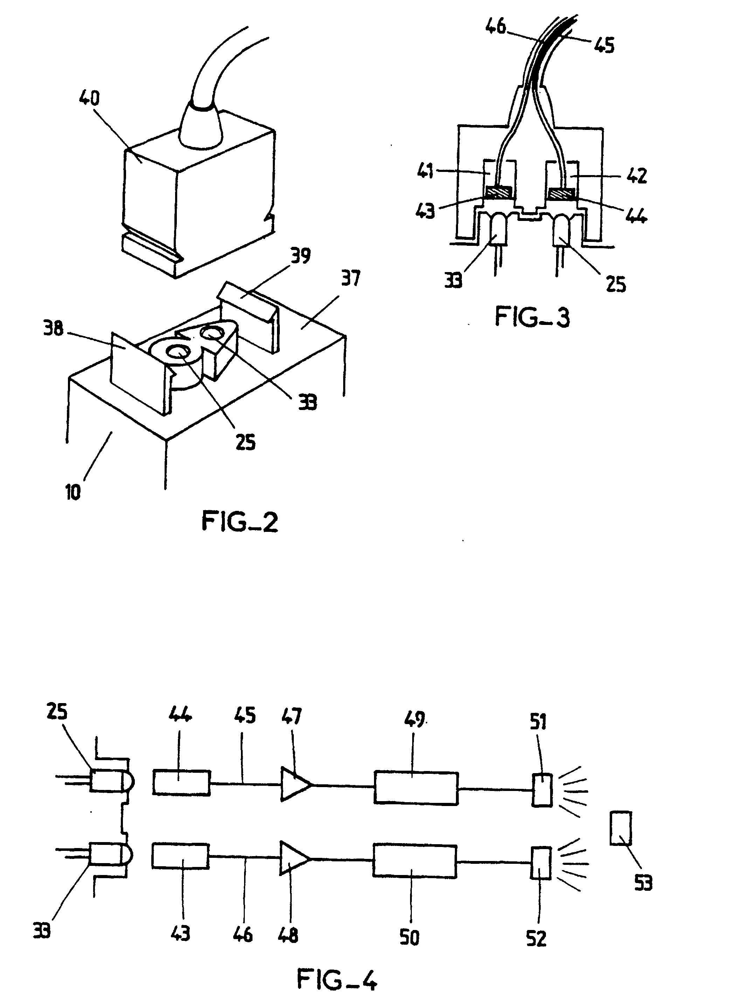

La figure 2 représente l'interface entre le circuit électrique 10 et le support d'enregistrement (non représenté) utilisé par le préposé.

Le circuit électrique 10 est enfermé dans un boîtier 37 sur lequel sont montés deux protubérances 38 et 39 qui permettent une fixation amovible par encliquetage du boîtier 40 connecteur réalisant la liaison entre le circuit 10 électrique et le support d'enregistrement. Le circuit électrique est disposé de sorte que les deux lampes 25 et 33 se trouvent à la surface extérieure supérieure du boîtier 37, deux ouvertures étant ménagées dans cette partie supérieure du boîtier pour y loger les deux lampes.

La figure 3 représente une coupe transversale du boîtier 40 connecteur. Il est ménagé dans le boîtier 40 connecteur deux canaux 41 et 42 qui viennent en correspondance au-dessus des deux lampes dans la position encliquetée du boîtier 40 sur le boîtier 37. Dans ces deux canaux, sont disposées deux photodiodes 43 et 44 qui sont chacune reliées par des conducteurs 45 et 46 au dispositif d'enregistrement.

La figure 4 représente un schéma de principe du dispositif d'enregistrement Chaque photodiode 43, 44 est reliée à un amplificateur 47, 48 qui est relié à un oscillateur 49, 50 générateur de fréquence sonore relié à un haut-parleur 51, 52 (ou buzzer). Un micromagnétophone 53 est disposé de manière à enregistrer les signaux sonores émis par les hauts-parleur 51, 52.

Lorsqu'une lampe 25 ou 36 émet de la lumière, la photodiode 43, 44 associée crée un courant amplifié par l'amplificateur 47, 48 qui est transmis à l'oscillateur 49, 50 générateur de fréquence sonore, le haut-parleur 51, 52 émettant alors un signal sonore enregistré par le micromagnétophone 53.

Les oscillateurs 49, 50 générateurs de fréquences sonores sont choisis de sorte à émettre chacun une fréquence qui lui est propre. Ici l'oscillateur 49 génère une fréquence continue à 3.000 Hz, tandis que l'oscillateur 50 génère une fréquence à découpage à 26.500 Hz.

Ainsi, à chaque séquence d'émission et d'extinction des lampes 25 et 33 va correspondre une séquence de fréquences sonores qui permettra à la personne écoutant l'enregistrement de connaître les informations émises sous la forme de signaux lumineux par les lampes 25 et 33 lors du passage de la clef magnétique qui active les interrupteurs suivant la séquence décrite précédemment.

Avant de passer la clef magnétique, le préposé peut indiquer oralement sur le magnétophone le numéro de la citerne, son adresse et la date. Ensuite, il passe la clef magnétique et le micromagnétophone enregistre la séquence sonore correspondant à l'état de la citerne donnée. Le préposé passe ensuite à une autre citerne.

Une autre possibilité est de prévoir plusieurs autres lampes ou photodiodes activées par un interrupteur ILS à lame souple, lui-même activé par la clef magnétique, ces lampes ou photodiodes supplémentaires émettant ou non pour fournir une séquence de signaux lumineux caractéristiques de la lampe et cette séquence pouvant être traduite en sons de la même manière que décrit ci-dessus à l'aide d'oscillateurs supplémentaires qui émettent des sons tels que par exemple "citerne numéro tant" et "la date est ...", etc, ... rendant le système encore plus indépendant du préposé.

## Revendications

1. Citerne comportant des moyens de détection de son état par envoi de signaux à un dispositif d'alerte (25) émettant des signaux autres que sonores, notamment des signaux lumineux, **caractérisée par** un magnétophone et par des moyens (50) de conversion des signaux émis par le dispositif d'alerte (25) en signaux transformés sonores aptes à être enregistrés par le magnétophone, celui-ci étant disposé de manière à enregistrer les signaux transformés issus des moyens (50) de conversion.

2. Citerne suivant la revendication 1, **caractérisée en ce que** le dispositif d'alerte comprend deux sources (25) notamment lumineuses, l'une fournissant une information d'un premier type, par exemple sur l'apparition d'eau de condensation à la surface extérieure de la cuve et l'autre d'un second type, par exemple sur le bon fonctionnement du dispositif d'alerte lui-même.

3. Citerne suivant la revendication 1 ou 2, **caractérisée en ce que** les moyens de conversion comprennent des oscillateurs (49, 50) générateurs de fréquences, commandés chacun par une source.

4. Citerne suivant les revendications 2 et 3, **caractérisée en ce qu'**une fréquence sonore est affectée à l'information du premier type et une autre fréquence sonore est affectée à l'information du second type.

5. Citerne suivant l'une des revendications précédentes, **caractérisée en ce que** le support d'enregistrement et les moyens de conversion forment un ensemble distinct du reste de la citerne.

6. Citerne suivant l'une des revendications précédentes, **caractérisée en ce que** le support d'enregistrement et les moyens de conversion forment un ensemble distinct du reste de la citerne.

7. Procédé de vérification d'une citerne comportant un dispositif d'alerte émettant un signal, notamment lumineux, représentatif des informations à enregistrer sur l'état de la citerne, **caractérisé en ce qu'**il comporte les étapes qui consistent à enregistrer, en un ordre quelconque sur un support d'enregistrement, d'une part, un signal ne provenant pas du dispositif d'alerte et, d'autre part, avant tout autre enregistrement relatif à une autre citerne et sur le même support d'enregistrement, un signal provenant du dispositif d'alerte.

8. Procédé suivant la revendication 7, **caractérisé en ce que** les signaux enregistrés sont des signaux sonores.

## Patentansprüche

1. Tank, der Mittel zur Überwachung seines Zustandes beinhaltet durch Aussendung von Signalen an eine Alarmvorrichtung (25), welche Signale abgibt, die keine Schallsignale, sondern insbesondere Lichtsignale sind, **gekennzeichnet durch** ein Aufnahmegerät und **durch** Mittel (50) zur Umwandlung der **durch** die Alarmvorrichtung (25) ausgegebenen Signale in verwandelte Schallsignale, welche **durch** das Aufnahmegerät aufgenommen werden können, wobei dieses darauf ausgerichtet ist, die **durch** die Mittel (50) zur Umwandlung verwandelten Signale aufzunehmen.

2. Tank gemäß Anspruch 1,
**dadurch gekennzeichnet, dass** die Alarmvorrichtung zwei Quellen (25), insbesondere Lichtquellen, beinhaltet, wobei die eine eine Information eines ersten Typs liefert, zum Beispiel über das Auftreten von Kondenswasser auf der äußeren Oberfläche des Tanks, und die andere eine Information eines zweiten Typs liefert, zum Beispiel über den störungsfreien Betrieb der Alarmvorrichtung selbst.

3. Tank gemäß Anspruch 1 oder 2,
**dadurch gekennzeichnet, dass** die Mittel zur Umwandlung frequenzerzeugende Oszillatoren (49, 50) beinhalten, die jeder durch eine Quelle betätigt werden.

4. Tank gemäß den Ansprüchen 2 und 3,
**dadurch gekennzeichnet, dass** eine Schallfrequenz bereitgestellt wird für die Information des ersten Typs und eine andere Schallfrequenz für die Information des zweiten Typs.

5. Tank gemäß einem der vorangegangenen Ansprüche,
**dadurch gekennzeichnet, dass** der Aufnahmeträger und die Mittel zur Umwandlung eine vom restlichen Tank verschiedene Einheit bilden.

6. Tank gemäß einem der vorangegangenen Ansprüche,
**dadurch gekennzeichnet, dass** der Aufnahmeträger und die Mittel zur Umwandlung eine vom restlichen Tank verschiedene Einheit bilden.

7. Verfahren zur Überprüfung eines Tanks, der eine Alarmvorrichtung beinhaltet, die ein charakteristisches Signal, insbesondere ein Lichtsignal, ausgibt, das für die aufzuzeichnenden Informationen über den Zustand des Tanks charakteristisch ist,
**dadurch gekennzeichnet, dass** es die Schritte beinhaltet, die darin bestehen, in einer beliebigen Reihenfolge auf einem Aufnahmeträger einerseits ein Signal, das nicht aus der Alarmvorrichtung stammt, aufzuzeichnen und andererseits vor jeder anderen Aufnahme bezüglich eines anderen Tanks und auf demselben Aufnahmeträger ein Signal, das aus der Alarmvorrichtung stammt, aufzuzeichnen.

8. Verfahren gemäß Anspruch 7,
**dadurch gekennzeichnet, dass** die aufgezeichneten Signale Schallsignale sind.

## Claims

1. Tank, which comprises means for detecting its condition by sending signals to an alarm device (25) emitting signals other than sound signals, notably light signals, **characterised by** a magnetic recorder, and by means (50) for converting signals emitted by the alarm device into transformed sound signals capable of being recorded by the magnetic recorder (53), the latter being arranged so as to record the converted signals issuing from the conversion means (50).

2. Tank according to claim 1, **characterised in that** the alarm device comprises two sources (25), particularly light sources, one of which supplies a first type of data, for example information as to the appearance of condensation water on the outer surface of the container, and the other a second type of data, e.g. regarding the satisfactory operation of the alarm device itself.

3. Tank according to claim 1 or 2, **characterised in that** the conversion means comprise frequency generating oscillators (49,50) each controlled by a source.

4. Tank according to claim 2 or 3, **characterised in that** one sound frequency is assigned to the first type of data and another sound frequency is assigned to the second type of data.

5. Tank according to any of the preceding claims, **characterised in that** the recording medium and the conversion means form a separate unit from the rest of the tank.

6. Tank according to any of the preceding claims, **characterised in that** the recording medium and the conversion means form a separate unit from the rest of the tank.

7. Method of checking a tank comprising an alarm device emitting a signal, especially a light signal, representing data to be recorded as to the condition of the tank, **characterised in that** it comprises the recording, in any order, on a recording medium, on the one hand, of a signal, which does not come from the alarm device and, on the other hand, before every other recording relating to another tank and on the same recording medium, of a signal coming from the alarm device.

8. Method according to claim 7, **characterised in that** the signals recorded are sound signals.
